Europäisches Patentamt

(19) European Patent Office

Office européen des brevets

(11) EP 0 743 637 A2

(12) EUROPEAN PATENT APPLICATION

(43) Date of publication:
20.11.1996 Bulletin 1996/47

(51) Int. Cl.$^6$: G11B 15/467, G11B 15/18,
G11B 15/12

(21) Application number: 96303488.9

(22) Date of filing: 16.05.1996

(84) Designated Contracting States:
DE GB

(30) Priority: 17.05.1995 JP 118801/95

(71) Applicant: KABUSHIKI KAISHA TOSHIBA
Kawasaki-shi, Kanagawa-ken 210 (JP)

(72) Inventor: Uemura, Toshiro
Gyota-shi, Saitama-ken, 361 (JP)

(74) Representative: Waldren, Robin Michael et al
MARKS & CLERK,
57-60 Lincoln's Inn Fields
London WC2A 3LS (GB)

(54) Magnetic recording and reproducing apparatus

(57) In recording, it is possible to obtain a pilot signal from the output signal of a reproducing head 13 as the reproducing head 13 reads tracks by read-after-write operation, to store the tracking condition of the reproducing head 13 into a memory 45 as a tracking error signal j1 by the operation of the circuits up to the tracking error data processing circuit 42, and to perform tracking control of the tracks that a tracking error data processing circuit 42 performs the next record based on an objective value that is stored into the memory 45 in assembly reproduction.

FIG.1

P1:WHEN REPRODUCING
43 (INCLUDING ASSEMBLY REPRODUCTION TIME)
P2:WHEN RECORDING

OFF:WHEN NOT ASSEMBLY REPRODUCING
46
ON:WHEN ASSEMBLY REPRODUCING

EP 0 743 637 A2

## Description

Background of the Invention

Field of the Invention:

The present invention relates to magnetic recording and reproducing apparatus for performing tracking control by pilot signals, and particularly to magnetic recording and reproducing apparatus suitable for linking recorded part end to newly recording part with a smooth connection.

Description of the Related Art:

Recently, a helical scanning type magnetic recording and reproducing apparatus using a magnetic tape as a recording medium has been developed as a data recording apparatus for computers or the like.

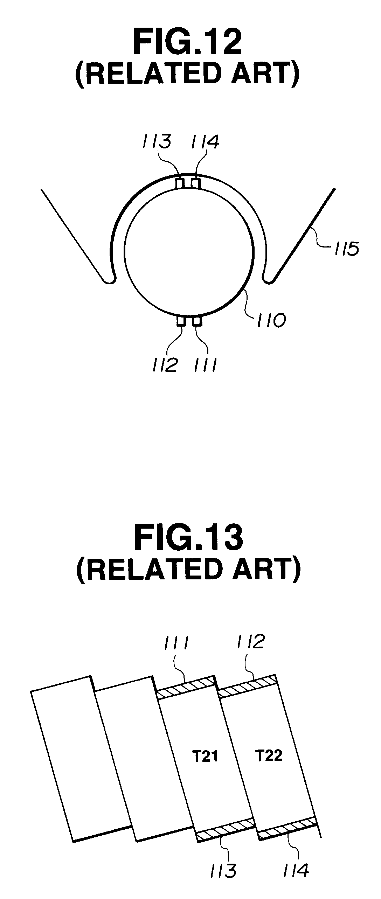

Fig. 12 is an explanatory view showing the structure of the heads of a rotary cylinder of said magnetic recording and reproducing apparatus.

In Fig. 12, a reference number 110 shows a rotary cylinder, and recording heads 111 and 112 are installed adjacent each other on the rotary cylinder 110. Reproducing heads 113 and 114 are installed adjacent each other on the position facing to said recording heads 111 and 112 on the rotary cylinder 110. Heads 113 and 114 face to heads 111 and 112 with approximately 180 degrees. A magnetic tape 115 is wound in the slant direction of said rotary cylinder 110, which is driven to run, and the recording heads 111 and 112 and the reproducing heads 113 and 114 scan helically a magnetic tape 115 by turning the rotary cylinder 110.

Fig. 13 is an explanatory view showing the condition of head tracing to a track pattern on a magnetic tape by the magnetic recording and reproducing apparatus of said embodiment.

In Fig. 13, when the recording heads 111 and 112 are on a top part of the tracks T21 and T22 after finishing writing, the reproducing heads 113 and 114 are on a bottom part of the tracks T21 and T22 and read operation of read-after write is started from this point of time.

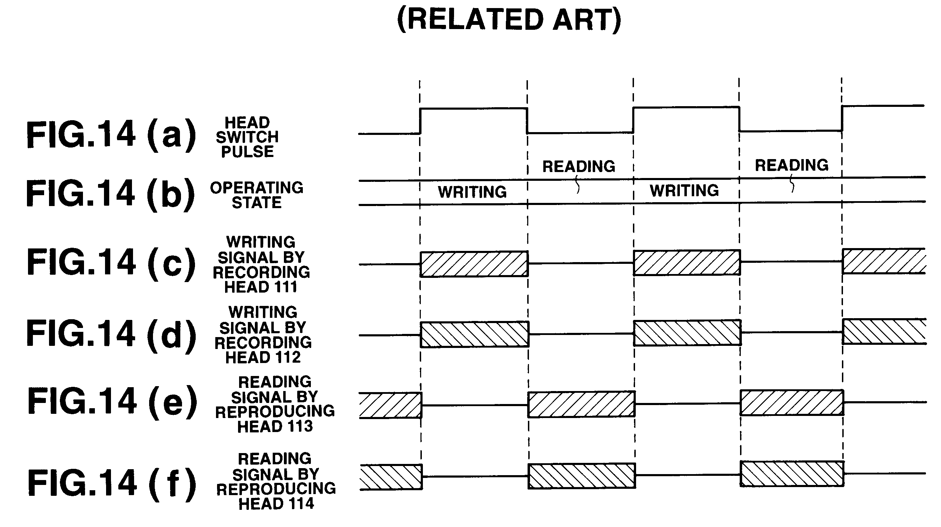

Fig. 14 is a timing chart showing the operation of the head tracing as shown in Fig. 13 in recording mode, Fig. 14 (a) shows a head switch pulse, Fig. 14 (b) shows an operating state, Fig. 14 (c) shows a writing signal supplied to the recording head 111, Fig. 14 (d) shows a writing signal supplied to the recording head 112, Fig. 14 (e) shows a reading signal from the reproducing head 113 and Fig. 14 (f) shows a reading signal from the reproducing head 114.

As shown in Fig. 14 (a), a head switch pulse is switched to high and low levels during rotation of the rotary cylinder by 180 degrees.

The operating state as shown in Fig. 14(b) is the writing state when the head switch pulse is high level and the reading state when the head switch pulse is low level.

The writing signals supplied to the recording heads 111 and 112, as shown in Fig. 14 (c) and (d), are under the condition that there are signals when the head switch pulses are on the writing state and that there is no signal when the head switch pulses are on the reading state. In the writing signals supplied to the recording heads 111, the pilot signal for tracking control is contained.

The reading signals from the reproducing heads 113 and 114, as shown in Fig. 14 (e) and (f), are under the condition that there is no signal on the writing state, and that there are signals on the reading state.

The data of the reading signals from the reproducing heads 113 and 114 is compared with the written data of the recording signals supplied to the recording heads 111 and 112 before one cycle and is judged as to whether writing has been performed properly or not.

In the reproducing mode, the writing state of the operating state of Fig. 14 (b) is disabled, and the writing state of Fig. 14 (c) and (d) is under the condition that there is no signal. Tracking control is performed, for example, by the pilot signal obtained from the reproducing signal of the reproducing head 113 that reproduces the tracks recorded by the recording head 111.

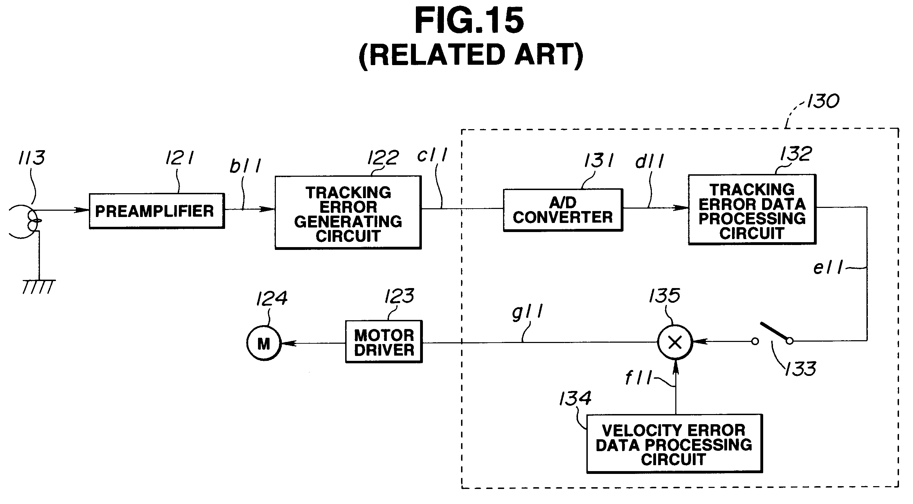

Fig. 15 is a block diagram showing a circuit system performing tracking control in the reproducing mode.

In Fig. 15, one end of the output terminals of a reproducing head 113 is connected with the input terminal of the preamplifier 121 and the other end of them is connected with a reference electric potential point.

The preamplifier 121 amplifies an output signal from the reproducing head 113 and supplies it to a tracking error generating circuit 122 as an output signal b11.

The tracking error generating circuit 122 creates the tracking error signal c11 from the pilot signal of the output signal b1 from the preamplifier 121 and supplies it to the microcomputer 130.

The microcomputer 130 consists of an A/D converting circuit 131, a tracking error data processing circuit 132, a switch 133, a velocity error data processing circuit 134 and a mixer 135.

The A/D converting circuit 131 converts an analog tracking error signal c11 from the tracking error generating circuit 122 to a digital tracking error signal d11 and supplies it to the tracking error data processing circuit 132.

The tracking error data processing circuit 132 performs calculation of difference, filter processing and other processing on error data shown by the supplied tracking error signal d11, and guides it to one terminal of the switch 133 as the tracking error signal e11. The other terminal of the switch 113 is connected with a first input terminal of the mixer circuit 135. The switch 133 is turned on in the case of reproducing mode, and supplies the tracking error signal e11 to the first input terminal of the mixer circuit 135. It is turned off in the case of recording mode, and stops supplying the tracking error signal e11 to the first input terminal of the mixer circuit 135.

The velocity error data processing circuit 134 processes velocity error data on velocity control of a capstan and supplies it as the velocity error signal f11 to the second input terminal of the mixer circuit 135.

The mixer circuit 135, when the tracking error signal e11 is supplied from the switch 133, guides it as a data signal g11 to a motor driver 123 by mixing the supplied tracking error signal e11 with the velocity error signal f11, and when the tracking error signal e11 is not supplied from the switch 133, guides the supplied velocity error signal f11 as the data signal g11 to the motor driver 123.

The motor driver 123 performs tracking control of the reproducing head 113 by driving a capstan motor 124 based on the data signal g11 from the mixer circuit 135.

In such a conventional magnetic recording and reproducing apparatus, the operation of linking last recorded track to not recorded track with a seamless connection will be described.

The operation of linking tracks with a seamless connect ion means that new track recording is started by adjusting to the row of tracks that have already been stored at the point of time of smarting recording. If this joint is in disorder, it will cause lack of reproducing data in reproducing.

Therefore, before starting recording, be sure to be in reproducing mode, perform tracking control (said controlling is called assembly reproducing), match-up tracings of heads with the tracks that have already been stored, then start recording.

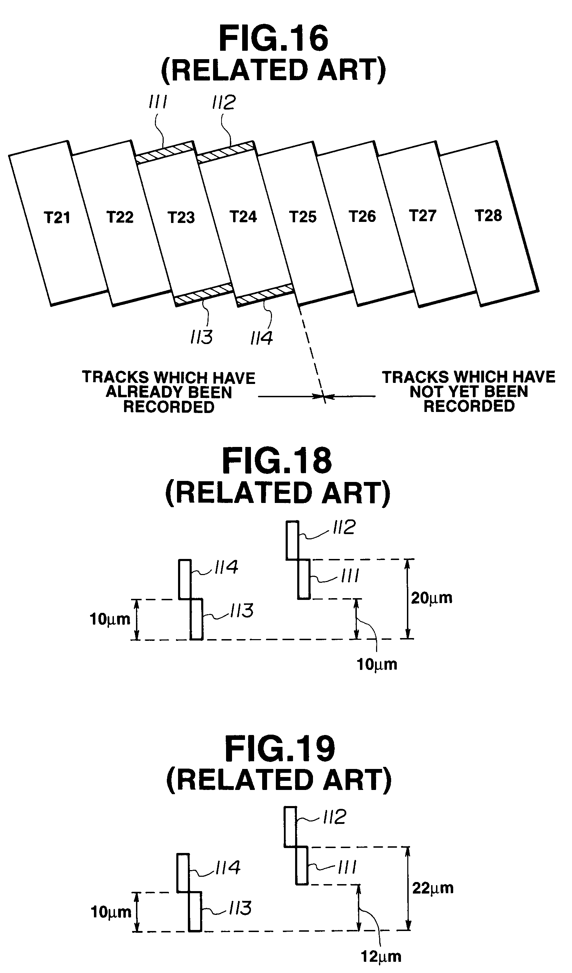

Fig. 16 is an explanatory view showing the track pattern when linking tracks with a seamless connection.

In Fig 16, in this case, the tracks T21 through T24 have already been recorded and the tracks T25 through T28 will be recorded newly.

Assembly reproducing is performed during more than ten tracks before starting recording. The last condition of assembly reproducing is shown in Fig. 16. When the recording heads 111 and 112 are on a top part of the tracks T23 and T24, the reproducing heads 113 and 114 are on a bottom part of the tracks T23 and T24 and the last reading operation in assembly reproducing is started from this point of time.

Fig. 17 is a timing chart showing the operation of the head tracing as shown in Fig. 16, Fig. 17 (a) shows a head switch pulse, Fig. 17 (b) shows the operating mode, Fig. 17 (c) shows writing signals supplied to the recording heads 111 and 112, Fig. 17 (d) shows reading signals from the reproducing heads 113 and 114.

As shown in Fig. 17 (a), a head switch pulse is switched to high and low levels for every 180-degree rotation of the rotary cylinder.

When the operating mode as shown in Fig. 17 (b) is assembly reproducing, the writing signals supplied to the recording heads 111 and 112 as shown in Fig. 17 (c) are under the condition that there is no signal, the reading signal from the reproducing heads 113 and 114 as shown in Fig. 17 (d) is under the condition that there is no signal when the head switch pulse is high level and is under the condition that there are signals when the head switch pulse is low level, the reading signals of the tracks T21 and T22 are outputted simultaneously from the reproducing heads 113 and 114, then, after rotating the rotary cylinder by 180 degrees, the reproducing signals of the tracks T23 and T24 are outputted simultaneously from the reproducing heads 113 and 114, tracking control is performed by the circuit as shown in Fig. 12 at the same time. By said assembly reproducing, the head tracing is in agreement with the track that has been stored, then is moved to the recording mode.

When the operating mode as shown in Fig. 17 (b) is recording (read-after-write), the writing signals supplied to the recording heads 111 and 112 as shown in Fig. 17 (c) are under the condition that there are signals when the head switch pulse is high level, the recording heads 111 and 112 record simultaneously the writing signals to tracks T25 and T26 and record simultaneously the writing signals to tracks T27 and T28 again when rotating the rotary cylinder by 360 degrees. When the head switch pulse is low level, the writing signals supplied to the recording heads 111 and 112 are under the condition that there is no signal. The reading signals from the reproducing heads 113 and 114 as shown in Fig.17 (d) are under the condition that there is no signal when the head switch pulse is high level, and are under the condition that there are signals when the head switch pulse is low level. The reading signals of the tracks T25 and T26 are simultaneously outputted from the reproducing heads 113 and 114, then, the reading signals of the tracks T27 and T28 are outputted at the same time from the reproducing heads 113 and 114 again when rotating the rotary cylinder by 360 degrees.

However, almost certainly differences occur between installation positions and head-widths of heads disposed on the rotary cylinder. Here, the installation height between the heads is shown in Fig. 18 and 19 when the track pitch is 10 micrometers and the width of each head is 10 micrometers.

Fig. 18 is an explanatory view showing the position of each head when there is no difference in positions between the recording heads and the reproducing heads as shown in Fig. 13.

As shown in Fig. 18, if there is no difference in the installation height (step) of the recording heads 111 ,112 and the reproducing heads 113 ,114, the recording heads 111 and 112 have the step of 10 micrometers to the reproducing heads 113 and 114 respectively. That is, the recording heads 111 and 112 have steps of 10 and 20 micrometers respectively to the reproducing head 113.

Fig. 19 is an explanatory view showing the position of each head when there are differences in positions between the recording heads and the reproducing heads as shown in Fig. 13.

As shown in Fig. 19, there are differences in the installation height (step) of the recording heads 111 ,112 and the reproducing heads 113 ,114, the recording heads 111 and 112 have a step of 12 micrometers to the reproducing heads 113 and 114 respectively. That is, the recording heads 111 and 112 have steps of 12 and 22 micrometers respectively to the reproducing head 113.

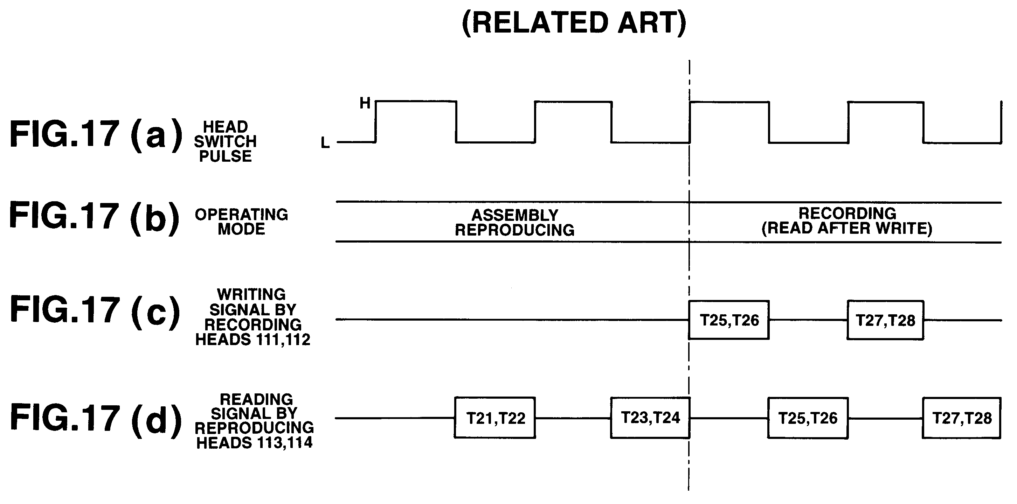

Fig. 20 is an explanatory view showing the state of head tracings relative to the track pattern on the magnetic tape in recording by the magnetic recording and reproducing apparatus as shown in Fig. 19.

In Fig. 20, the tracks T21 and T22 are created by the recording heads 111 and 112. Here, as the recording heads 111 and 112 are 2 micrometers high from the reproducing heads 113 and 114 respectively, the reproducing heads 113 and 114 trace the position shifted left by 2 micrometers from the tracks T21 and T22.

Fig. 21 is an explanatory view showing the state of head tracings relative to the track pattern on the magnetic tape in reproducing by the magnetic recording and reproducing apparatus as shown in Fig. 19.

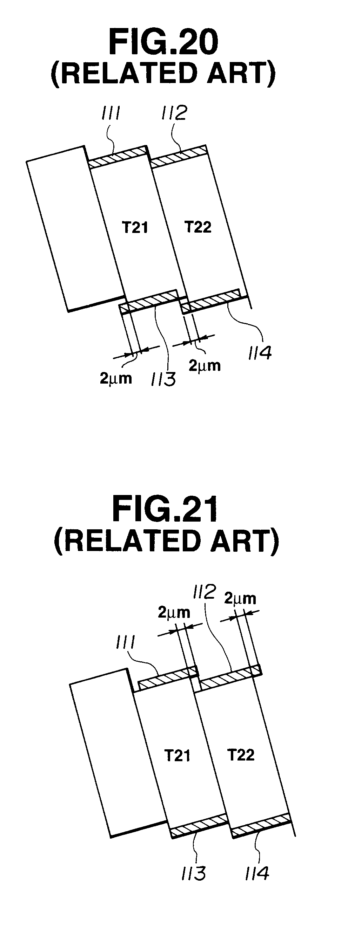

In Fig. 21, as tracking control is performed by the pilot signal reproduced through the reproducing heads 113 and 114 during reproduction, the reproducing heads 113 and 114 trace the center of the track and the recording heads 111 and 112 trace the position shifted right by 2 micrometers from the tracks T21 and T22.

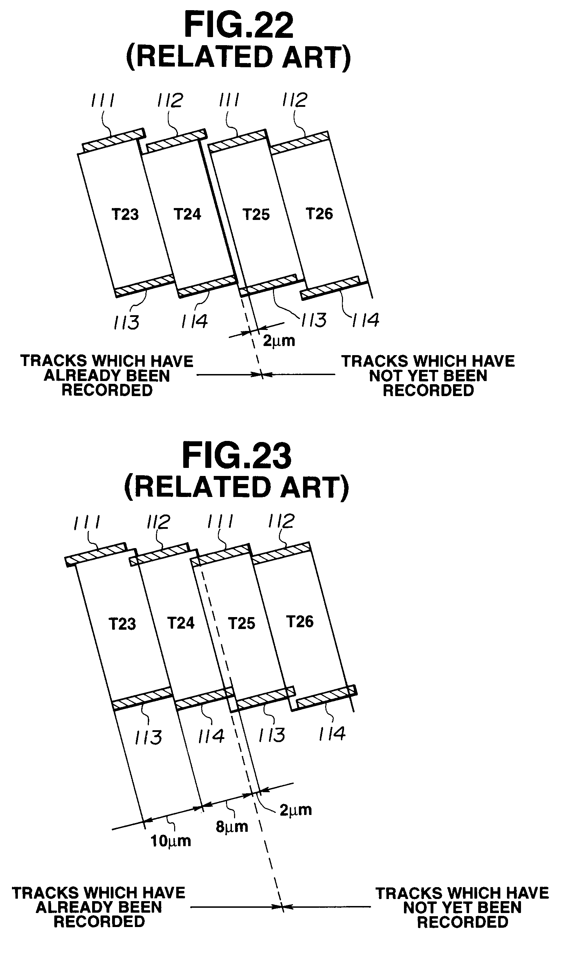

Fig. 22 is an explanatory view showing the state of head tracing relative to the track pattern on the magnetic tape when linking tracks with a smooth connection as shown by the magnetic recording and reproducing apparatus in Fig. 19.

In Fig. 22, in this case, the tracks T23 and T24 have already been recorded and the tracks T25 and T26 will be recorded newly.

In this case, the recording heads 111 and 112 in assembly reproducing in the tracks T23 and T24 trace the position shifted right by 2 micrometers from the tracks T23 and T24, then, record the tracks T25 and T26, therefore, it causes a blank of 2 micrometers between the tracks T24 and T25. In the case of reproducing the part by usual reproducing, tracking is shifted at that moment, the level of the reading signal is dropped, and the read data tends to be lacking.

Next, the state of the head tracing when the recording heads 111 and 112 have the step of 8 micrometers relative to the reproducing heads 113 and 114 respectively will be explained.

Fig. 23 is an explanatory view showing the state of head tracing relative to the track pattern on the magnetic tape when linking tracks with a smooth connection as shown by the magnetic recording and reproducing apparatus when the recording heads 111 and 112 have the step of 8 micrometers relative to the reproducing heads 113 and 114 respectively.

In Fig. 23, in this case, the tracks T23 and T24 have already been recorded and the tracks T25 and T26 will be recorded newly.

In this case, the recording heads 111 and 112 in assembly reproducing in the tracks T23 and T24 trace the position shifted left by 2 micrometers from the tracks T23 and T24, then, record the tracks T25 and T26, therefore, the width of the track T24 is 8 micrometers and it causes a drop in the level of the reading signal in reading mode.

Further, when there are differences in the widths of the recording heads 111 , 112 and the reproducing heads 113 ,114, it causes a drop in the level of the reading signal in the reading mode similar to the case where the recording heads 111 and 112 are shifted from the reproducing heads 113 and 114.

In such a conventional magnetic recording and reproducing apparatus, when the installing position between the recording head and the reproducing head is shifted from the normal position and the width of the heads is different, in linking tracks with a smooth connection, the row of the tracks is in disorder at the joints, the level of the reproducing signal of the part drops in reading and the read data tends to be lacking.

Summary of the Invention:

An object of the present invention is to provide a magnetic recording and reproducing apparatus such that it is possible to prevent the row of the tracks from being in disorder in linking tracks with a smooth connection when the installation position between the recording head and the reproducing head is shifted from the normal position and the width of the heads is different.

A magnetic recording and reproducing apparatus according to the first invention comprises a first and second magnetic head means installed on a rotary cylinder at a predetermined interval to each other and at a predetermined installation step; recording mode setting means for setting the recording mode to write recording information including a pilot signal of tracking information in reproducing to a magnetic tape by said first magnetic head means to form tracks successively and to read written tracks by said second magnetic head means; reproducing mode setting means for setting the reproducing mode to reproduce the recording information including said pilot signal by said second magnetic head means and to perform tracking control based on a reproducing pilot signal; tracking error information storing means for obtaining tracking error information based on reading output of said second magnetic head means and for storing said tracking error information into storing means in said recording mode; and recording controlling means for performing tracking control using the tracking error information stored in said storing means as a tracking target value while reading the predetermined track period before the last end part of said written tracks by said second magnetic head means and then for writing new recording information by said recording mode when writing new recording information continuously to the recorded information on a magnetic tape on which the recording information has been recorded.

A magnetic recording and reproducing apparatus according to the second invention comprises a first and second magnetic head means installed on a rotary cylinder at a predetermined interval to each other and at the predetermined installation step; tracking error information storing means for obtaining tracking error information based on reading output of said second magnetic head means and for, storing said tracking error information into storing means when recording mode to write recording information including a pilot signal of tracking information in reproducing to a magnetic tape by said first magnetic head means to form tracks successively and to read written tracks by said second magnetic head means; recording controlling means for performing tracking control using the tracking error information stored in said storing means as a tracking target value while reading the predetermined track period before the last end part of said written tracks by said second magnetic head means and then for writing new recording information by said recording mode when writing new recording information continuously to the recorded information on a magnetic tape on which the recording information has been recorded.

According to the structure of the present invention, when storing the tracking error information into the storing means in recording mode and writing successively new information to the recorded information, as the recorded track is read by performing tracking control using the tracking error information as a tracking target value and then new information is written successively to the tracks which have already been recorded, it is possible to prevent the row of the tracks from being in disorder in linking tracks with a smooth connection when the installing position between the recording head and the reproducing head is shifted from the normal position and the width of the heads is different.

Brief Description of the Drawings:

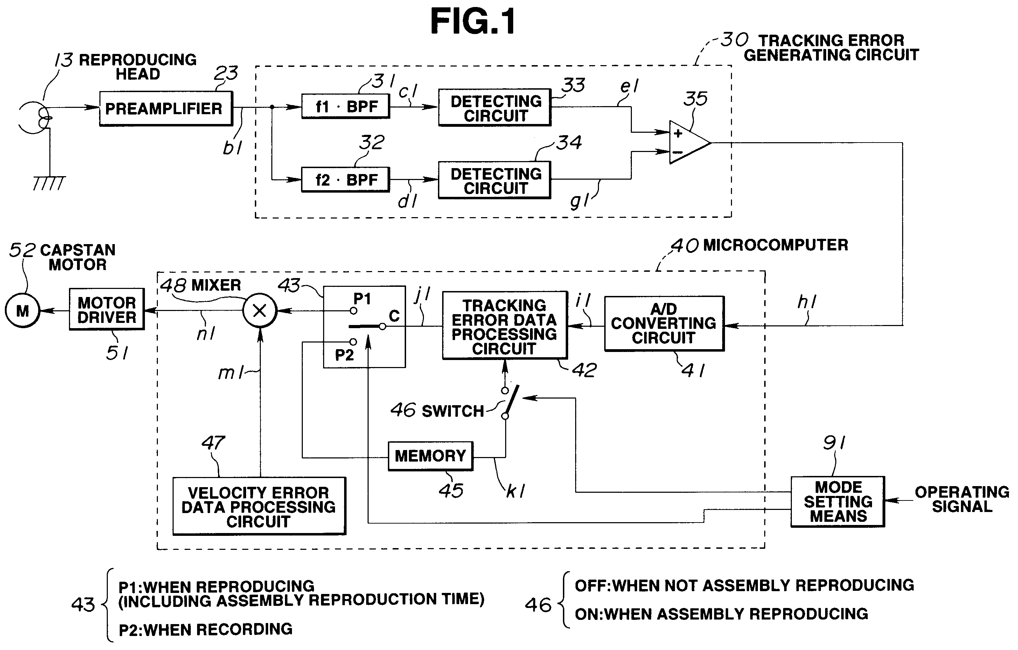

Fig. 1 is a block diagram of a circuit system that performs tracking control showing one embodiment of a magnetic recording and reproducing apparatus according to the present invention.

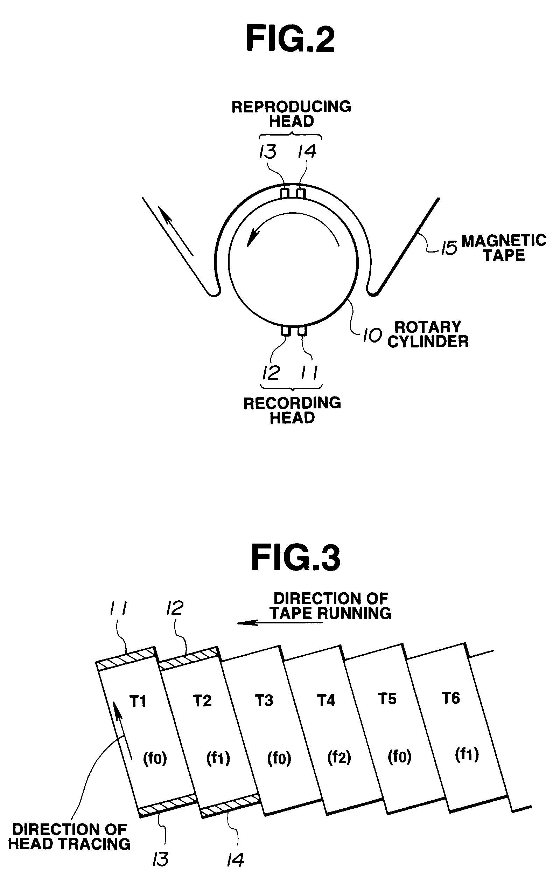

Fig. 2 is an explanatory view showing the structure of heads of a rotary cylinder of the helical scan type magnetic recording and reproducing apparatus in which the circuit system that performs the tracking control in Fig. 1 is used.

Fig. 3 is an explanatory view showing the state of head tracing relative to a track pattern on a magnetic tape in reproducing by the magnetic recording and reproducing apparatus of the embodiment as shown in Fig. 1.

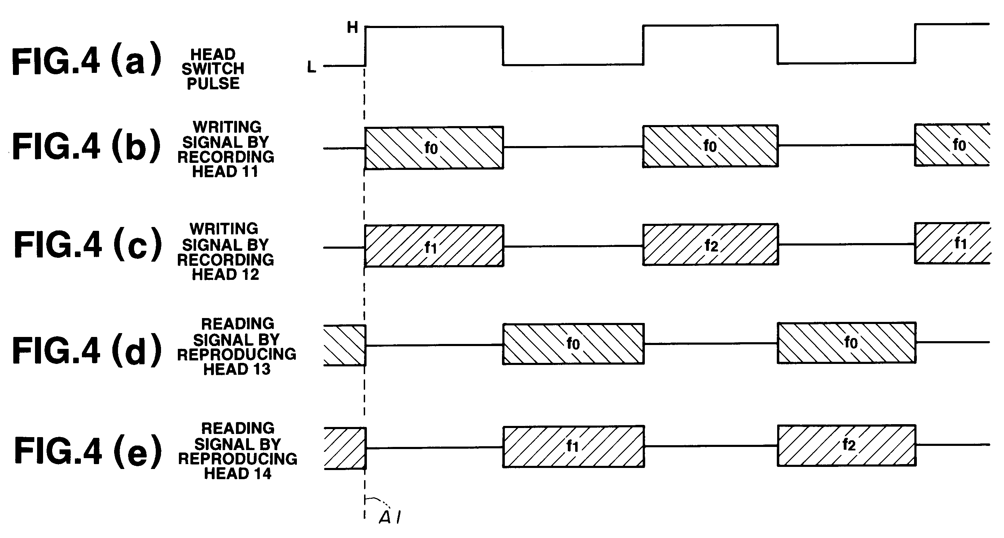

Fig. 4(a) - (e) are a timing chart showing the operation of the head tracing as shown in Fig. 3.

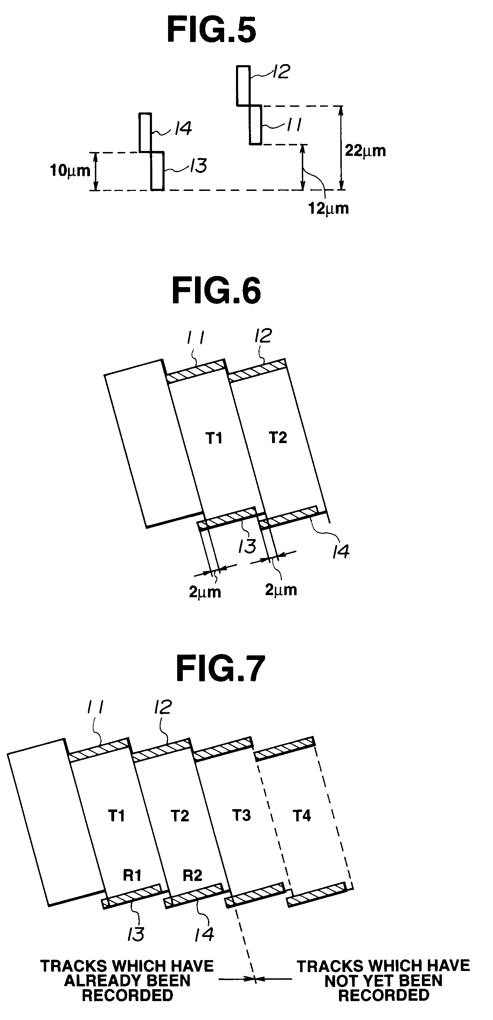

Fig. 5 is an explanatory view showing the position of each head when there are differences in positions between the recording heads and the reproducing heads as shown in Fig. 2.

Fig. 6 is an explanatory view showing the state of head tracings relative to the track pattern on the magnetic tape in recording by the magnetic recording and reproducing apparatus of the embodiment as shown in Fig. 5.

Fig. 7 is an explanatory view showing the state of head tracings to the track pattern on the magnetic tape when linking tracks with a smooth connection in the condition as shown in Fig. 6.

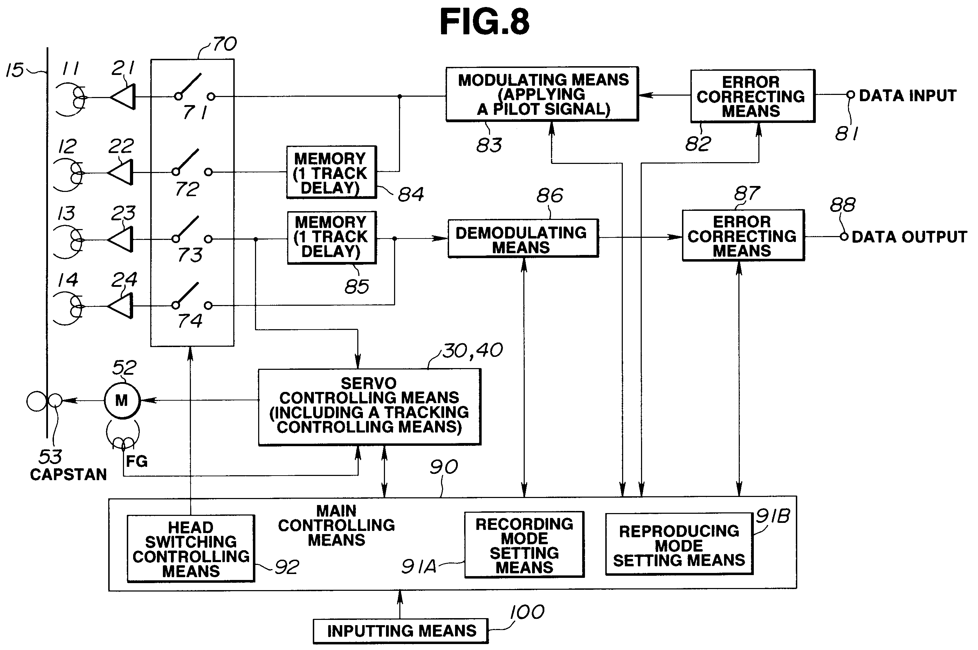

Fig. 8 is a block diagram of the magnetic recording and reproducing apparatus according to the present invention.

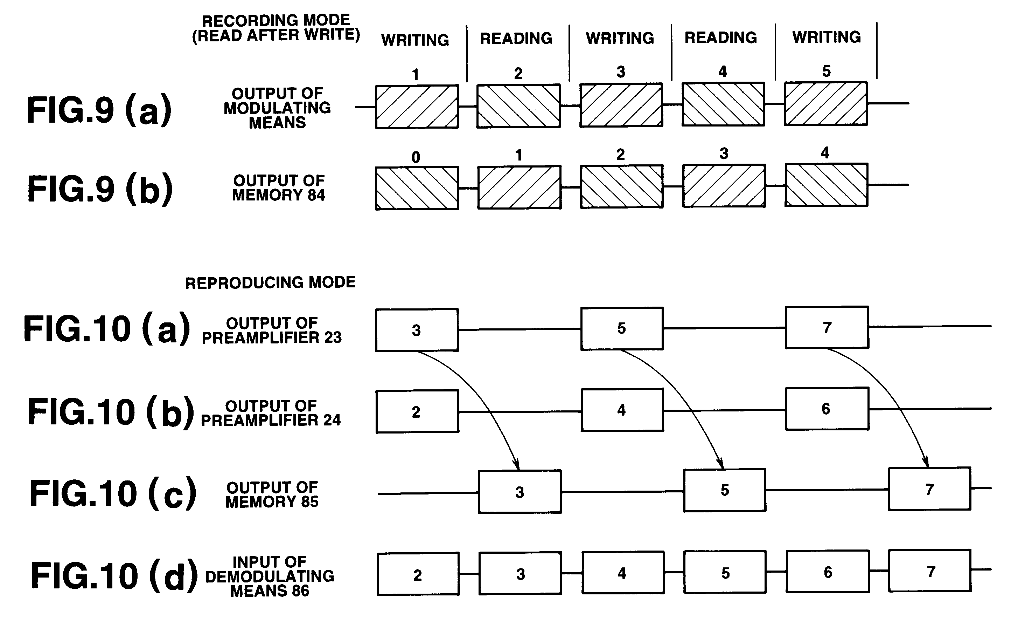

Fig. 9 (a), (b) are a timing chart in the recording mode of Fig. 8.

Fig. 10 (a) - (d) are a timing chart in the reproducing mode of Fig. 8.

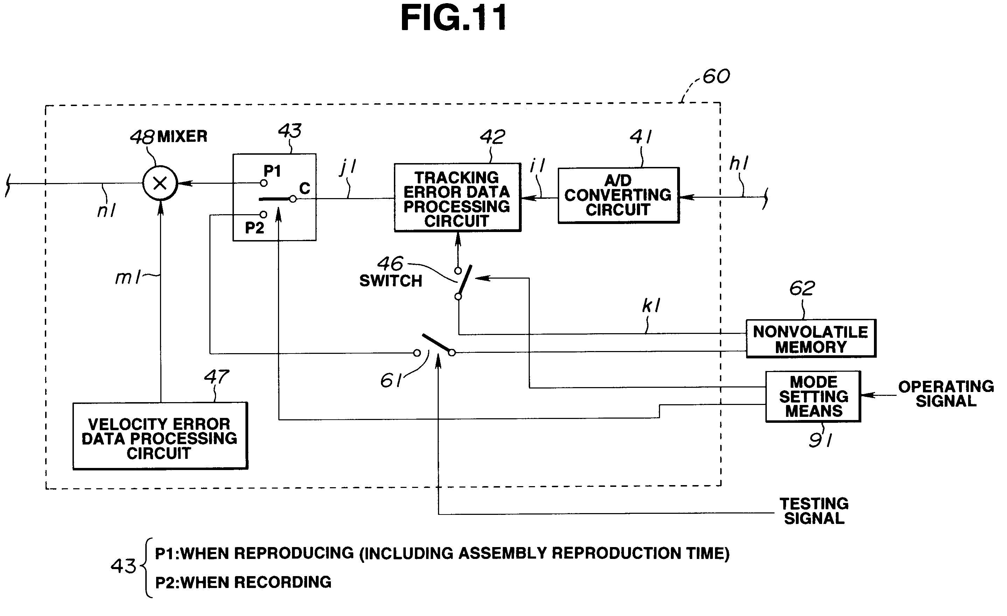

Fig. 11 is a block diagram showing a microcomputer and a nonvolatile memory showing another embodiment of a magnetic recording and reproducing apparatus according to the present invention.

Fig. 12 is an explanatory view showing the structure of the heads of the rotary cylinder of a conventional magnetic recording and reproducing apparatus.

Fig. 13 is an explanatory view showing the state of head tracing relative to a track pattern on a magnetic tape in recording by the conventional magnetic recording and reproducing apparatus.

Fig. 14 (a) - (f) are a timing chart showing the operation of the head trace as shown in Fig. 13.

Fig. 15 is a block diagram showing a circuit system performing the tracking control in typical reproduction of the conventional magnetic recording and reproducing apparatus.

Fig. 16 is an explanatory view showing the track pattern in the case of operation when linking tracks with a smooth connection using the conventional magnetic recording and reproducing apparatus.

Fig. 17 (a) - (d) are a timing chart showing the operation of the head trace as shown in Fig. 16.

Fig. 18 is an explanatory view showing the position of each head when there is no difference in positions between the recording heads and the reproducing heads as shown in Fig. 13.

Fig. 19 is an explanatory view showing the position of each head when there are differences in positions between the recording heads and the reproducing heads as shown in Fig. 13.

Fig. 20 is an explanatory view showing a state of head tracing relative to a track pattern on a magnetic tape in recording by the magnetic recording and reproducing apparatus in the condition as shown in Fig. 19.

Fig. 21 is an explanatory view showing a state of head tracing relative to a track pattern on a magnetic tape in reproducing by the magnetic recording and reproducing apparatus in the condition as shown in Fig. 19.

Fig. 22 is an explanatory view showing a state of head tracing relative to a track pattern on a magnetic tape in linking tracks with a smooth connection by the magnetic recording and reproducing apparatus in the condition as shown in Fig. 19.

Fig. 23 is an explanatory view showing the condition of the head trace when the recording head has a step of 8 micrometers relative to the reproducing head in the conventional magnetic recording and reproducing apparatus.

Detailed Description of the Preferred Embodiments:

An embodiment of the present invention will be described referring to drawings as follows.

Fig. 1 is a block diagram of a circuit system that performs tracking control showing one embodiment of a magnetic recording and reproducing apparatus according to the present invention.

In Fig. 1, one end of output terminals of a reproducing head 13 is connected with the input terminal of the preamplifier 23 and the other end of them is connected with a reference electric potential point.

The preamplifier 23 amplifies an output signal from the reproducing head 13 and supplies it to a f1 bandpass filter (hereafter referred to as f1 • BPF) 31 and a f2 bandpass filter (hereafter referred to as f2 • BPF) 32 of a tracking error generating circuit 30 as an output signal b1.

The tracking error generating circuit 30 consists of f1 • BPF 31, f2 • BPF 32, detecting circuits 33 and 34 and a comparator 35, generates and outputs a tracking error signal h1 by detecting pilot signal (frequencies f1 and f2) components contained in a reproducing signal from the reproducing head 13.

f1 • BPF 31 filters the bandpass of a first frequency f1 to a supplied output signal b1 and supplies the output signal c1 of the extracted frequency f1 to the detecting circuit 33.

f2 • BPF 32 filters the bandpass of a second frequency f2 to the supplied output signal b1 and supplies the output signal d1 of the extracted frequency f2 to the detecting circuit 34.

The detecting circuit 33 detects the output signal c1 of the frequency f1 and supplies a detecting signal e1 to the uninversion input terminal (+) of the comparator 35.

The detecting circuit 34 detects the output signal d1 of the frequency f2 and supplies a detecting signal g1 to the inversion input terminal (-) of the comparator 35.

The comparator 35 subtracts the detecting signal g1 from the detecting circuit 34 from the detecting signal e1 from the detecting circuit 33 and supplies the output signal h1 of the result of subtraction to an analog/digital converting circuit (hereafter referred to as A/D converting circuit) 41 of a microcomputer 40.

The microcomputer 40 consists of the A/D converting circuit 41, the tracking error data processing circuit 42, a changing switch 43, a memory 45, a switch 46, a velocity error data processing circuit 47 and a mixer 48, and is a controlling means that in recording, the switch 43 is connected with a terminal P2 and tracking error information is stored into the memory 45, and in assembly reproducing, the switch 43 is connected with a terminal P1 and a switch 46 is turned on and tracking control is performed by using the tracking error information stored into said memory 45 as a target value.

A mode setting means 91 outputs a mode setting signal to set each mode of recording, reproducing and assembly reproducing in linking tracks with a smooth connection based on an operating signal from an input means that is not shown.

The A/D converting circuit 41 converts an analog tracking error signal h1 from the tracking error generating circuit 30 to a digital tracking error signal i1 and supplies it to the tracking error data processing circuit 42.

In the tracking error data processing circuit 42, when the tracking error signal k1 is not supplied from the switch 46 as below mentioned, the target value of tracking is (0), when the tracking error signal k1 is supplied from the switch 46 as below mentioned, the target value of tracking is shown by the tracking error signal k1, and the supplied tracking error signal i1 is output as the tracking error signal j1 by performing calculation of difference from the target value and filter processing and other processing on an error data shown by the tracking error signal i1 to agreed with the target value of tracking, and is guided to a common terminal of the switch 43. A first output terminal P1 of the switch 43 is connected with a rust input of the mixer 48 and the second output terminal P2 of it is connected with an input terminal of the memory 45.

The switch 43, in the case of reproducing mode (including assembly reproducing), selects the first output terminal P1, supplies the tracking error signal j1 to the first input terminal of the mixer 48 and prohibits supply of the tracking error signal j1 to the memory 45, and in the case of recording mode (not including the assembly reproducing), selects the second output terminal P2, supplies the tracking error signal j1 to the memory 45 and stops supplying the tracking error signal j1 to the first input terminal of the mixer 48. The memory 45 deletes data that has already been stored each time when a new tracking error signal j1 is supplied, stores the supplied data and guides the stored data to one terminal of the switch 46 as the tracking error signal k1. The other terminal of the switch 46 is connected with the second input terminal of the tracking error data processing circuit 42. The switch 46, when assembly reproducing, is turned on and the tracking error signal k1 from the memory 45 is guided to the second input terminal of the tracking error data processing circuit 42, and when not assembly reproducing, the supply of the tracking error signal k1 to the second input terminal of the tracking error data processing circuit 42 is prohibited.

Tracking error information storing means consists of said tracking error generating circuit 30 and the memory. Further, a recording control means consists of said tracking error data processing circuit 42, the switch 43, the switch 46 and mode setting means 91.

The velocity error data processing circuit 47 performs data processing of a velocity error in capstan velocity control and supplies it to the second input terminal of the mixer 48 as a velocity error signal m1.

The mixer 48, when the tracking error signal j1 is supplied from the first output terminal P1 of the switch 43, mixes the supplied tracking error signal j1 with a velocity error signal m1 and guides it as a data signal n1 to a motor driver 51, and when the tracking error signal j1 is not supplied from the switch 43, guides the velocity error signal m1 as the data signal n1 to the motor driver 51.

The motor driver 51 controls tape feed by driving a capstan motor 52 based on the data signal n1 from the mixer 48, and performs tracking control of the reproducing head 13.

Fig. 2 is an explanatory view showing the structure of heads of a rotary cylinder of the helical scan type magnetic recording and reproducing apparatus in which the circuit system that performs the tracking control as shown in Fig. 1 is used.

In Fig. 2, a reference number 10 shows a rotary cylinder and recording heads 11 and 12 as first magnetic head means are installed adjacent each other on the rotary cylinder 10. Reproducing heads 13 and 14 are installed adjacent each other on the position facing to said recording heads 11 and 12 on the rotary cylinder 10. Heads 13 and 14 face to heads 11 and 12 with approximately 180 degrees. A magnetic tape 15 is wound in the slant direction of said rotary cylinder 10, which is driven to run, and the recording heads 11 and 12 and the reproducing heads 13 and 14 scan helically a magnetic tape 15 at the same time respectively by the rotation of the rotary cylinder 10.

Fig. 3 is an explanatory view showing the state of head tracing relative to a track pattern on a magnetic tape by the magnetic recording and reproducing apparatus of said embodiment.

In Fig. 3, when the recording heads 11 and 12 are on a top part of tracks T1 and T2, the reproducing heads 13 and 14 are on a bottom part of the tracks T1 and T2 and the reproducing heads 13 and 14 start to read the tracks T1 and T2 from a point of time. Here, the tracks T1, T2, T3, T4, T5, T6 ... are a f0 track, an f1 track, an f0 track, an f2 track, an f0 track, an f1 track ... respectively.

The f1 track is the track where an information signal including the pilot signal of the frequency f1 is written by the head 12, f2 track is the track where an information signal including the pilot signal of the frequency f2 is written by the head 12 and f0 track is the track where an information signal not including the pilot signal is written by the head 11.

Fig. 4 is a timing chart showing the operation of the head tracing as shown in Fig. 3, Fig. 4 (a) shows a head switch pulse, Fig. 4 (b) shows a writing signal from the recording head 11, Fig. 4 (c) shows a writing signal from the recording head 12, Fig. 4 (d) shows a reading signal from the reproducing head 13 and Fig. 4 (e) shows a reading signal from the reproducing head 14.

As shown in Fig. 4 (a), a head switch pulse is switched to high and low levels at every time the rotary cylinder is rotated by 180 degrees.

The writing signals supplied to the recording heads 11 and 12, as shown in Fig. 4 (b) and (c), are under the condition that there are signals when the head switch pulses are high level (H), and that there is no signal when the head switch pulses are low level (L).

The reading signals from the reproducing heads 13 and 14, as shown in Fig. 4 (d) and (e), are under the condition that there are signals when the head switch pulses are low level, and that there is no signal when the head switch pulses are high level.

The recording heads 11 and 12 write the f0 track and f1 track from timing A1 at the same time respectively, and in the following writing, the f0 track and f2 track are written at the same tune respectively.

In reading, the reproducing heads 13 and 14 read the f0 track and f1 track at the same time, and in the following reading, the f0 track and f2 track are read at the same time respectively.

In the tracks made up as above mentioned, in the case of performing tracking control in reproducing, reproducing pilot signal components that are contained in the signal reproduced by the reproducing head 13 are used. If the tracking is adapted, the first and the second pilot signal components are on the same signal level as each other (or under the condition that there are no both signal components).

Describing the operation in reproducing in this case referring to Fig. 1, the output signal of the reproducing head 13 is amplified by the preamplifier 21, the first and the second pilot signal components are taken out by f1 · BPF 31 and f2 · BPF 32 of the tracking error generating circuit 30 respectively, are detected by the detecting circuits 33 and 34 respectively and converted into DC voltages. The level L (f1) of the first pilot signal component (the detecting signal e1) and the level L (f2) of the second pilot signal component (the detecting signal g1) are compared by the comparator 35, when {L (f1) - L (f2)} is (0) = (the value of center) , the tracking is not shifted. When the tracking is shifted and the reproducing head 13 is moved left or right, either the level L (f1) or (f2) is larger, the value of {L (f1) - L (f2)} is shifted to the direction of + or - and it is possible to control the tracking of the following step by the value of + or -. Said output signal (the tracking error signal h1) of the comparator 35 is A/D converted by the A/D converting circuit 41 of the microcomputer 40, fed to the tracking error data processing circuit 42, performed calculation of difference from the target value and filter processing and then guided to the common terminal C of the switch 43 as the tracking error signal j1. In this case, the first output terminal P1 of the switch 43 is selected, and the tracking error signal j1 is mixed with the velocity error signal m1 by the mixer 48 and guided to the motor driver 51 as the data signal n1. The tracking control of the reproducing head 13 is performed by driving the capstan motor 52 based on said data signal n1 by the motor driver 51.

The operation in recording will be described as follows. In recording, the tracking control is not performed and the second output terminal P2 of the switch 43 of the microcomputer 40 is selected. However, as the track is read by read-after-write operation by the reproducing head 13, it is possible to obtain the pilot signal from the output signal of the reproducing head 13 and possible to know the tracking condition of the reproducing head 13 as the tracking error signal j1 by the operations upto the tracking error data processing circuit 42, therefore, it is stored into the memory 45.

The operation when there are differences in positions between the recording heads and the reproducing heads will be described as follows.

Fig. 5 is an explanatory view showing a position of each head when there are differences in positions between the recording heads and the reproducing heads as shown in Fig. 2.

As shown in Fig. 5, there are differences in installation heights (steps) of the recording heads 11,12 and the reproducing heads 13,14, the recording heads 11 and 12 have steps of 12 micrometers to the reproducing heads 13 and 14 respectively.

Fig. 6 is an explanatory view showing the state of head tracings to the track pattern on the magnetic tape in reproducing by the magnetic recording and reproducing apparatus of the embodiment as shown in Fig. 5.

In Fig. 6, tracks T1,T2 are created by the recording heads 11,12. As the recording heads 11 and 12 are 2 micrometers high from the reproducing heads 13 and 14 respectively, the reproducing heads 13 and 14 trace the position shifted left by 2 micrometers from the tracks T1 and T2.

Here, by actuating the tracking error generating circuit 30 and detecting the error by the microcomputer 40, it is possible to detect that the reproducing head 13 is shifted left by 2 micrometers from the track. For example, if a detecting value of amount of shift of tracking is (1) per micrometer, shift to left is shown as (+) and the shifting to right is shown as (-), the detecting value will be (+2). The microcomputer 40 stores the data of (+2) as the tracking error signal j1 into the memory 45. In this case, the detecting value is stabilized by taking the mean value of the plurality of sampling values.

Linking tracks with a smooth connection under the condition with said shift will be described referring to Fig. 7.

Fig. 7 is an explanatory view showing the condition of head tracing relative to the track pattern on the magnetic tape when linking tracks with a smooth connection in the state as shown in Fig. 6.

In Fig. 7, in this case, the tracks T1 and T2 have already been recorded and the tracks T3 and T4 will be recorded newly.

The reproducing condition is set over more than ten tracks before the tracks T1 and T2 by the assembly reproducing, the tracking control is performed based on the pilot signal component read by the reproducing head 13 and the tracking is taken. As the switch 46 in Fig. 1 is turned on in this case, the target value of the tracking control is the tracking error signal j1 (+2) (that is, tracking error signal k1 is (+2)) stored into the memory 45, under the condition of taking tracking, the reproducing heads 13 and 14 are controlled to trace the position shifted left by 2 micrometers to the tracks T1 and T2 at the stage of tracing the tracks T1 and T2. Next, though the recording heads 11 and 12 are switched to the recording mode at timing of starting tracing the tracks T3 and T4 and the tracking control is stopped, as the tracking error signal j1 is (0) under this condition , the data signal n1 applied to the motor driver 51 is not changed, the prior condition of the recording heads tracing is maintained, therefore, it is possible to prevent a blank from occurring between the tracks T2 and T3 and prevent a row of tracks from disorder.

Similarly, in the case that there are differences in width of heads, it is possible to prevent tracks from disorder in linking tracks with a smooth connection by storing the target value into the memory 45 in recording and by taking tracking as the target value of the tracking control over more than ten tracks before starting recording in assembly reproducing is the value stored into said memory 45 similar to the case that there are differences in positions between the recording heads and the reproducing heads.

According to said embodiment, as it is possible to prevent the row of tracks from being in disorder in linking tracks with a smooth connection in the case that an installation position between the recording head and the reproducing head is shifted from the regular position and that there are differences in width of the recording and the reproducing heads, it is possible to prevent the row of tracks from being in disorder in linking tracks with a smooth connection, it is possible to prevent the level of the reproducing signal from declining and prevent the reproducing data from lacking in reproducing a linked tracks part.

Fig. 8 is a block diagram of the magnetic recording and reproducing apparatus according to the present invention.

In Fig. 8, it is possible to run the magnetic tape as a recording medium by the rotating force of the capstan 53 wound on the rotary cylinder that is not shown. The recording heads 11 and 12 and the reproducing heads 13 and 14 are installed on the rotary cylinder similarly to Fig. 2. The data signal such as a computer supplied to an input terminal 81, after the processing for correcting an error during reproduction is performed by an error correcting means 82, is modulated to a form of signal fit to tape recoding by a modulating means 83, has pilot signals added, one of which is possible to be supplied through a switch 71 of a head changing switch 70 and the preamplifier 21 to the recording head 11 as it is, and the other of which is stored into the memory 84 having the capacity of one track, is delayed by one recording period (a half rotation of the rotary cylinder) portion which can be supplied through a switch 72 of the head changing switch 70 and the preamplifier 22 to the recording head 12. Said switches 71 and 72 are turned on only when recording.

The modulated data that is recorded by the recording heads 11 and 12 is reproduced by the reproducing heads 13 and 14 in reproducing, and is outputted through the preamplifiers 23 and 24 and through the switches 73 and 74 of the head changing switch 70, the output of the preamplifier 24 is supplied to a demodulating means 86 as it is, the output of the preamplifier 23 is stored into the memory 85 having the capacity of one track, is delayed by one recording period (a half rotation of the rotary cylinder) portion and is supplied to the demodulating means 86. The modulated output data from two circuits is changed to line up with the serial data, and is supplied to the demodulating means 86. Said serial data is demodulated by the demodulating means 86, error correcting is performed by error correcting means 87 and is outputted from an output terminal 88 as reproduced data. Said switches 73 and 74 are turned on only when reproducing.

The output of the reproducing head 13 is supplied through the switch 73 to the tracking control means (the circuits 30 and 40 as shown in Fig. 1) in a servo controlling means. The output from the servo controlling means is supplied through the motor driver to the capstan motor 52 to provide the rotating force to a capstan 53. The rotating velocity information is obtained as a frequency generator signal for feedback from a frequency generator (FG) installed to the capstan motor 53 and the servo controlling means generates a velocity error signal through the velocity error data processing circuit (circuit 47 shown in Fig. 1) based on this FG signal.

A main controlling means 90 comprises a recording mode setting means 91A, a reproducing mode setting means 91B and a head switching controlling means 92 and mode setting of recording, reproducing, and linking tracks with a smooth connection is possible corresponding to an operating signal from an inputting means 100. Corresponding to the recording mode setting the error correcting means 82 and the modulating means 83 are actuated and corresponding to the reproducing mode setting, the demodulating means 86 and the error correcting means 87 are actuated. Further, corresponding to each operating mode, each of switches 71 through 74 of the head changing switch 70 is selectively turned on or off by the head switching controlling means 92. When writing in the recording mode (that is, the read-after-write mode), writing to the tape 15 is performed by turning on the switches 71 and 72 and by turning off the switches 73 and 74, and when reading, reading the data from the tape 15 is performed by turning on the switches 73 and 74 and by turning off the switches 71 and 72. In linking tracks with a smooth connection, when assembly reproducing, reading the data from the prerecorded track of the tape 15 is performed by turning on the switches 73 and 74 and by turning off the switches 71 and 72, the tracking (tracking adjusting) of the head is performed by extracting the pilot signal necessary for tracking controlling, then the mode is changed into the recording mode from the next track position of the last terminal portion of the prerecorded track and the data is written to the tape 15. And by turning on the switches 71 and 72 and by turning off the switches 73 and 74, data writing to the tape 15 is performed. The signal ouputted from the head switching controlling means 92 is basically the head switch pulse shown in Fig. 4. If switches 71 through 74 are turned on when the input is on high level, the head switch pulse supplied to switches 71 and 72 is also supplied to switches 73 and 74 through an inverter (not shown).

In Fig. 9, timing charts of output of the modulating means 83 and the memory 84 in the recording mode (read-after-write) are shown. Each of numerals 0, 1, 2, 3,... shows data sequence. The output data of the memory 84 as shown in Fig. 9 (b) is one track delayed data to the output data of the modulating means 83 as shown in Fig. 9 (a).

For example, data 1 is written by the recording head 11 and at the same time data 0 is written by the recording head 12. Though data 2 is outputted from the modulating means 83 during next period and the data 1 is outputted from the memory 84, the writing operation by the recording heads 11 and 12 are turned off in this period and the reading operation by the reproducing heads 13 and 14 are turned on. That is, after writing by half rotation by alternately turned on or off the recording switches 71 and 72 and the reproducing switches 73 and 74 during half rotation in one rotating period of the rotary cylinder, the reading operation is performed at once during the following half rotation. Therefore, data 1 and 0 of a two-track portion are recorded at the same time by the recording heads 11 and 12, and similarly, two-track portion such as data 3,2 and 4,5 and so on will be written on the magnetic tape 15.

In Fig. 10, timing charts for each output of preamplifiers 23 and 24, the output of the memory 85 and the input of the demodulating means 86 in reproducing mode are shown. In reproducing, the switches 71 and 72 are turned off, the switches 73 and 74 are turned on, reproducing is performed by half rotation of the rotary cylinder, for example, the operation where the modulated data 3 and 2 of two tracks is detected by the reproducing heads 13 and 14 at the same time, then the data 5 and 4 is detected in period of half rotating the rotary cylinder after interval of one track, further, the data 7 and 6 is detected in period of half rotating the rotary cylinder after interval of one track is repeated. The data obtained from the reproducing heads 13 and 14 at the same time is outputted through the preamplifiers 23 and 24, and the output data is obtained intermittently similarly to Fig. 4(d),(e) as shown in Fig. 10 (a) and (b). The output of the preamplifier 23 is delayed by one reproducing priod (a half rotation of the rotary cylinder) portion by storing it into the memory 85 and the output of the memory 85 is outputted at timing as shown in Fig. 10 (c). By composing the output of the memory 85 and the output of the preamplifier 24 as shown in Fig. 10 (b) at the input terminal of the demodulating means 86, the serial modulated data 2, 3, 4, 5,... as shown in Fig. 10 (d) are obtained as the input of the demodulating means 86. This serial data is supplied to the demodulated means 86 and is demodulated.

Fig. 11 is a block diagram showing a microcomputer and a nonvolatile memory showing another embodiment of the magnetic recording and reproducing apparatus according to the present invention and the same components as those of the embodiment as shown in Fig. 1 are indicated by the same numerals and description of them is abbreviated.

In the embodiment of Fig. 11, a switch 61 is provided in a microcomputer 60 instead of providing the memory 45 in Fig. 1 and a nonvolatile memory 62 is provided outside the microcomputer 60.

A second output terminal P2 of a changing switch 43 is connected with one terminal of the switch 61. The other terminal of the switch 61 is connected with an input terminal of the nonvolatile memory 62.

The switch 61 is controlled to turn on and off by the test signal set by an operation such as key input by the magnetic recording and reproducing apparatus.

The nonvolatile memory 62 deletes prestored data every time a new tracking error signal j1 is supplied, stores supplied data and guides the stored data to one terminal of the switch 46 as the tracking error signal k1.

According to said embodiment, it is possible to select by using the test signal whether the detecting value of the tracking error in recording is stored into the nonvolatile memory 62 or not.

This is in order to make it possible to store the detecting value of the tracking error by turning on the switch 61 by inputting the test signal in the manufacturing process of the present apparatus without storing the detecting value of the tracking error in the recording mode under the condition of usual use. As this value is the intrinsic value of the rotary cylinder, if the detecting value of the tracking error in reproducing is stored once, it will not be necessary to change it. Therefore, as the storing means to store the detecting value of the tracking error in reproducing, the nonvolatile memory 62 is provided outside the microcomputer 60.

According to said embodiment, it has the same effect as that of the embodiment as shown in Fig. 1, the detecting value of the tracking error in reproducing may be stored once, therefore, it is possible to raise the efficiency of the operation of the circuit compared to the embodiment in Fig. 1 and possible to save electric power and reduce malfunction.

Still, in the embodiments in Fig. 1 and 8, though the tracking control apparatus of the magnetic recording and reproducing apparatus having two reproducing heads and two recording heads is used, the magnetic recording and reproducing apparatus having another number of reproducing heads and recording heads may be used. In the embodiments Fig. 1 and 11, two kinds of frequencies of the pilot signal are used, another number of kinds of frequencies of the pilot signal may be used, for example, four.

In the embodiment (Fig. 1, Fig. 11) of the present invention stated above, the switch 43 (Fig. 1, Fig. 11) is switched on for recording and reproducing and the switch 46 is switched on for assembly reproducing and other operations. However, after tracking error information is once stored in the memory during recording, the tracking control can also be performed by using the stored tracking error information as a target value during the following recording. In this case, switch 43 is switched to P1 and switch 46 is switched to ON.

As mentioned above, according to the present invention, when the installing position between the recording head and the reproducing head is shifted from the regular position or there are differences in the width of the heads of the recording head and the reproducing head, as it is possible to prevent the row of the tracks from disorder in linking tracks with a smooth connection, it is possible to prevent the level of the reproducing signal from dropping and prevent the reproducing data from lacking in the case of reproducing a part linked with a smooth connection.

Still, the present invention is not limited to said embodiments and various modifications and variations can be made without departing from the spirit or scope of the present invention.

## Claims

1. A magnetic recording and reproducing apparatus characterized by comprising:

a first and second magnetic head means installed on a rotary cylinder (10) at a predetermined interval to each other and at a predetermined installation step; recording mode setting means (91) for setting the recording mode to write recording information including a pilot signal of tracking information in reproducing on a magnetic tape (15) by said first magnetic head means to form tracks successively and to read written tracks by said second magnetic head means; reproducing mode setting means (91) for setting the reproducing mode to reproduce the recording information including said pilot signal by said second magnetic head means and to perform tracking control based on a reproducing pilot signal; tracking error information storing means (30, 45) for obtaining tracking error information based on reading output of said second magnetic head means and for storing said tracking error information into storing means (45) in said recording mode; and recording controlling means (42, 43, 46, 91, 92) for performing tracking control using the tracking error information stored in said storing means as a tracking target value while reading the predetermined track period before the last end part of said written tracks by said second magnetic head means and then for writing new recording information by said recording mode when writing new recording information continuously to the recorded information on a magnetic tape (15) on which the recording information has been recorded.

2.  A magnetic recording and reproducing apparatus according to claim 1, wherein said first and second magnetic head means consists of a plurality of heads the number of which is the same respectively, information is recorded so that the plurality of tracks which are the same number as the heads are formed simultaneously by the first magnetic head means, respective plurality of tracks are reproduced by the second magnetic head means at the same time.

3.  A magnetic recording and reproducing apparatus according to claim 1, wherein said first and second magnetic head means consists of two heads (11 and 12, and 13 and 14) respectively, the information is recorded so that two tracks are formed simultaneously by the first magnetic herd means (11, 12), two tracks are reproduced at the same time by the second magnetic head means (13, 14), further, said pilot signal consists of a first and second signals, said recording track consists of circulation of four tracks of the track on which the first pilot signal is recorded, the track without the pilot signal, the track on which the second pilot signal is recorded and the track without the pilot signal.

4.  A magnetic recording and reproducing apparatus according to claim 3, wherein said tracking control is performed based on difference between levels of components of the first and second pilot signals reproduced by the magnetic head reproducing the track on which the pilot signal is not recorded of two heads of said second magnetic head means (13, 14).

5.  A magnetic recording and reproducing apparatus according to claim 1, wherein said storing means (45) is nonvolatile.

6.  A magnetic recording and reproducing apparatus according to claim 5, wherein said storing means (45) is provided with means (61) to select whether making said storing means perform storing operation.

7.  A magnetic recording and reproducing apparatus, comprising:

    first and second magnetic head means installed on a rotary cylinder (10) at a predetermined interval to each other and at a predetermined installing step;
    tracking error information storing means (30, 45) for obtaining tracking error information based on reading output of said second magnetic head means and for storing said tracking error information into storing means (45) when recording mode to write recording information including a pilot signal of tracking information in reproducing to a magnetic tape (15) by said first magnetic head means to form tracks successively and to read written tracks by said second magnetic head means.
    recording controlling means (42, 43, 46, 91, 92) for performing tracking control using the tracking error information stored in said storing means (45) as a tracking target value while reading the predetermined track period before the last end part of said written tracks by said second magnetic head means and then for writing new recording information by said recording mode when writing new recording information continuously to the recorded information on a magnetic tape (15) on which the recording information has been recorded.

8.  A magnetic recording and reproducing apparatus according to claim 7, wherein said storing means (45) is nonvolatile.

9.  A magnetic recording and reproducing apparatus according to claim 8, wherein said storing means (45) is provided with means (61) to select whether making said storing means (45) perform storing operation.

10. A magnetic recording and reproducing apparatus comprising;

    first magnetic head means for recording only installed on a rotary cylinder (10);
    second magnetic head means for reproducing only installed on said rotary cylinder (10) at predetermined intervals and with a predetermined installing step with respect to said first magnetic head means;
    recording mode setting means (91) for alternately repeating the writing operation to write the recording information and the pilot signal which is the tracking information in the reproducing to form tracks successively on a running magnetic tape (15) by said first magnetic head means and the reading operation to read said written track by said second magnetic head means;

tracking error information storing means (30, 45) for storing the tracking error information for said second magnetic head means which is obtained based on the reading signal containing the pilot signal component of said second magnetic head means in a storing means (45) in said recording mode;

reproducing mode setting means (91)for performing the reproducing operation of said track by said second magnetic head means, while performing the tracking control based on said tracking error information obtained from the pilot signal contained in the reproducing signal;

tracking controlling means (42, 43, 46, 91, 92) for switching the tracking control in the reproducing mode using the tracking error information stored in said storing means (45) as the tracking target value when the mode is switched from said reproducing mode to said recording mode.

11. A magnetic recording and reproducing apparatus according to Claim 10, wherein said tracking error information storing means (30, 45) includes a nonvolatile memory and the tracking error information obtained during the first recording operation by said magnetic recording and reproducing apparatus is stored in said nonvolatile memory.

12. A magnetic recording and reproducing apparatus according to Claim 11, wherein said first recording operation is performed in the production process of the magnetic recording and reproducing apparatus.

13. A magnetic recording and reproducing apparatus comprising:

first magnetic head means for recording only installed on a rotary cylinder (10);
second magnetic head means for reproducing only installed on said rotary cylinder (10) at predetermined intervals and with a predetermined installing step with respect to said first magnetic head means;
recording mode setting means (91) for alternately repeating the writing operation to write the recording information and the pilot signal which is the tracking information in the reproducing to form tracks successively on a running magnetic tape (15) by said first magnetic head means and the reading operation to read said written track by said second magnetic head means;
reproducing mode setting means (91) for performing the reproducing operation of said track by said second magnetic head means, while performing the tracking control based on said tracking error information obtained from the pilot signal contained in the reproducing signal;
recording controlling means (42, 43, 46, 91, 92) for obtaining the tracking error information of said second magnetic head means based on the reproducing signal containing the pilot signal component of said second magnetic head means in the early stage in said recording mode, and for storing such tracking error information in said storing means (45), and further for performing tracking control based on the reproducing signal from said second magnetic head means using the tracking error information stored in said storing means (45) as a target value in the subsequent recording mode.

14. A magnetic recording and reproducing apparatus comprising:

first magnetic head means for recording only installed on a rotary cylinder (10);
second magnetic head means for reproducing only installed on said rotary cylinder (10) at predetermined intervals and with a predetermined installing step with respect to said first magnetic head means;
recording mode setting means (91) for alternately repeating the writing operation to write the recording information and the pilot signal which is the tracking information in the reproducing to form tracks successively on a running magnetic tape (15) by said first magnetic head means and the reading operation to read said written track by said second magnetic head means and for outputting the tracking error information based on the reproduced pilot signal; and
recording controlling means (42, 43, 46, 91, 92) for performing tracking control using said tracking error information as the tracking target value in said recording mode.

# FIG.1

30 TRACKING ERROR GENERATING CIRCUIT

13 REPRODUCING HEAD

23 PREAMPLIFIER

31 f1 · BPF

32 f2 · BPF

33 DETECTING CIRCUIT

34 DETECTING CIRCUIT

35

40 MICROCOMPUTER

52 CAPSTAN MOTOR

48 MIXER

43

51 MOTOR DRIVER

42 TRACKING ERROR DATA PROCESSING CIRCUIT

41 A/D CONVERTING CIRCUIT

46 SWITCH

45 MEMORY

47 VELOCITY ERROR DATA PROCESSING CIRCUIT

91 MODE SETTING MEANS

OPERATING SIGNAL

43 { P1:WHEN REPRODUCING (INCLUDING ASSEMBLY REPRODUCTION TIME)
P2:WHEN RECORDING

46 { OFF:WHEN NOT ASSEMBLY REPRODUCING
ON:WHEN ASSEMBLY REPRODUCING

# FIG.2

REPRODUCING HEAD

13  14

15 MAGNETIC TAPE

10 ROTARY CYLINDER

12  11

RECORDING HEAD

# FIG.3

11  12

DIRECTION OF TAPE RUNNING

| T1 | T2 | T3 | T4 | T5 | T6 |
| (f0) | (f1) | (f0) | (f2) | (f0) | (f1) |

DIRECTION OF HEAD TRACING

13  14

FIG.4 (a) HEAD SWITCH PULSE

FIG.4 (b) WRITING SIGNAL BY RECORDING HEAD 11

FIG.4 (c) WRITING SIGNAL BY RECORDING HEAD 12

FIG.4 (d) READING SIGNAL BY REPRODUCING HEAD 13

FIG.4 (e) READING SIGNAL BY REPRODUCING HEAD 14

EP 0 743 637 A2

# FIG.5

10μm

14

13

12

11

22μm

12μm

# FIG.6

11    12

T1    T2

13    14

2μm    2μm

# FIG.7

11    12

T1    T2    T3    T4

R1    R2

13    14

**TRACKS WHICH HAVE ALREADY BEEN RECORDED**    **TRACKS WHICH HAVE NOT YET BEEN RECORDED**

## FIG.8

RECORDING MODE
(READ AFTER WRITE)

| WRITING | READING | WRITING | READING | WRITING |

**FIG.9 (a)** OUTPUT OF MODULATING MEANS

**FIG.9 (b)** OUTPUT OF MEMORY 84

REPRODUCING MODE

**FIG.10 (a)** OUTPUT OF PREAMPLIFIER 23

**FIG.10 (b)** OUTPUT OF PREAMPLIFIER 24

**FIG.10 (c)** OUTPUT OF MEMORY 85

**FIG.10 (d)** INPUT OF DEMODULATING MEANS 86

EP 0 743 637 A2

**FIG.11**

60

41 A/D CONVERTING CIRCUIT

42 TRACKING ERROR DATA PROCESSING CIRCUIT

43 — C, P1, P2

46 SWITCH

47 VELOCITY ERROR DATA PROCESSING CIRCUIT

48 MIXER

61

62 NONVOLATILE MEMORY

91 MODE SETTING MEANS

OPERATING SIGNAL

TESTING SIGNAL

h1, i1, j1, k1, l1, m1, n1

43 { P1:WHEN REPRODUCING (INCLUDING ASSEMBLY REPRODUCTION TIME)
P2:WHEN RECORDING

# FIG.12
## (RELATED ART)

# FIG.13
## (RELATED ART)

# (RELATED ART)

FIG.14 (a) HEAD SWITCH PULSE

FIG.14 (b) OPERATING STATE

WRITING | READING | WRITING | READING

FIG.14 (c) WRITING SIGNAL BY RECORDING HEAD 111

FIG.14 (d) WRITING SIGNAL BY RECORDING HEAD 112

FIG.14 (e) READING SIGNAL BY REPRODUCING HEAD 113

FIG.14 (f) READING SIGNAL BY REPRODUCING HEAD 114

EP 0 743 637 A2

# FIG.15
## (RELATED ART)

EP 0 743 637 A2

# FIG.16
## (RELATED ART)

TRACKS WHICH HAVE
ALREADY BEEN
RECORDED

TRACKS WHICH HAVE
NOT YET BEEN
RECORDED

# FIG.18
## (RELATED ART)

# FIG.19
## (RELATED ART)

# (RELATED ART)

**FIG.17 (a)** HEAD SWITCH PULSE

**FIG.17 (b)** OPERATING MODE

| ASSEMBLY REPRODUCING | RECORDING (READ AFTER WRITE) |

**FIG.17 (c)** WRITING SIGNAL BY RECORDING HEADS 111,112

| T25,T26 | T27,T28 |

**FIG.17 (d)** READING SIGNAL BY REPRODUCING HEADS 113,114

| T21,T22 | T23,T24 | T25,T26 | T27,T28 |

EP 0 743 637 A2

# FIG.20
## (RELATED ART)

# FIG.21
## (RELATED ART)

# FIG.22
## (RELATED ART)

TRACKS WHICH HAVE
ALREADY BEEN
RECORDED

TRACKS WHICH HAVE
NOT YET BEEN
RECORDED

# FIG.23
## (RELATED ART)

TRACKS WHICH HAVE
ALREADY BEEN
RECORDED

TRACKS WHICH HAVE
NOT YET BEEN
RECORDED